# EUROPEAN PATENT APPLICATION

(11) **EP 4 141 638 A1**
(43) Date of publication of application: **01.03.2023**
(21) Application number: 22191835.2
(22) Date of filing: 24.08.2022
(51) Int. Cl.: G06F 3/04886

(54) **DYNAMICALLY ADAPTABLE VIRTUAL KEYBOARD**

(30) Priority: 26.08.2021 FI 20215900
(71) Applicant: Telia Company AB, 169 94 Solna (SE)
(72) Inventor: BAER, Anders, 12059 ÅRSTA (SE)
(74) Representative: Berggren Oy

(57) **Abstract**

The invention relates to a method, the method comprising: recording (210) user input through a virtual keyboard (120) of a device (100) for generating a user input history; determining (220), based on the user input history, at least one character associated with at least one correction operation in a context of the user input through the virtual keyboard (120) of the device (100); generating (230) a control signal for adjusting an output of the at least one character on the virtual keyboard (120), the at least one character is selected based on the at least one correction operation. The invention also relates to a computer program and to an apparatus (100, 150).

## Description

### TECHNICAL FIELD

The invention concerns in general the technical field of user interfaces.

### BACKGROUND

Due to an emerge of terminal devices for communication user interface technologies have been developed, and especially use of so-called touch screens has tremendously increased.

The touch screen technology is based on an assembly of both an input device and an output device in the same device. In other words, the input panel and the output panel are stacked on a top of each other so that a visual output may be generated with the output panel, and the user is able to provide input by touching the screen which is detected by the input panel. The output panel is typically implemented with a LCD or OLED technology whereas the input panel, i.e. the touch-sensitive panel, may be based on resistive or capacitive sensing as well as on other technologies, such as a surface acoustic wave technology, an infrared grid technology, or even an optical imaging among other technologies.

Typical area of application of the touch screens is that a so-called virtual keyboard is output with the output device to allow the user to provide input with the virtual keyboard by touching a desired character of the keyboard. For example, the virtual keyboard may be used for inputting a message to a social media service. There have been developed a plurality of ways to adjust the virtual keyboard to help the user to input the characters in an efficient manner. For example, in a document US 2013/0257732 A1 it is disclosed a generation of the virtual keyboard at a location where the user's hand, or hands, are placed on the touch screen.

In spite of the various approaches already introduced in the field, there is room for developing new solutions for improving an input of characters through the virtual keyboard.

### SUMMARY

The following presents a simplified summary in order to provide basic understanding of some aspects of various invention embodiments. The summary is not an extensive overview of the invention. It is neither intended to identify key or critical elements of the invention nor to delineate the scope of the invention. The following summary merely presents some concepts of the invention in a simplified form as a prelude to a more detailed description of exemplifying embodiments of the invention.

An object of the invention is to present a method, a computer program, and an apparatus for adjusting a virtual keyboard.

The objects of the invention are reached by a method, a computer program, and an apparatus as defined by the respective independent claims.

According to a first aspect, a method is provided, the method comprising:
recording user input through a virtual keyboard of a device for generating a user input history,
determining, based on the user input history, at least one character associated with at least one correction operation in a context of the user input through the virtual keyboard of the device,
generating a control signal for adjusting an output of the at least one character on the virtual keyboard, the at least one character is selected based on the at least one correction operation.

For example, the recording of the user input through the virtual keyboard may be performed by storing data corresponding to the user input in a memory.

The determination of the at least one character associated with at least one correction operation, in turn, may be performed by: identifying data indicative of a correction operation from the user input history; determining data indicative of the character input next to the correction operation.

The adjusting of the output of the at least one character may be performed by at least one of: enlarging a size of a zone defining the respective character; highlighting the respective character, changing a shape of the respective character.

Moreover, the user input from the user input history applied in the determination may be selected by at least one of: over a predefined time window, based on an application applying the virtual keyboard, based on a recipient of a message composed with the virtual keyboard.

The character for adjusting the output of the respective character may be selected from a character string forming a word, the word may be selected from a dictionary applied in a predictive input method by the device.

According to a second aspect, a computer program is provided, the computer program comprising instructions which, when the program is executed by a computer, cause the computer to carry out the method according to the first aspect as defined above.

According to a third aspect, an apparatus is provided, the apparatus is configured to:
record user input through a virtual keyboard of a device for generating a user input history,
determine, based on the user input history, at least one character as-sociated with at least one correction operation in a context of the user input through the virtual keyboard of the device,
generate a control signal for adjusting an output of the at least one char-acter on the virtual keyboard, the at least one character is selected based on the at least one correction operation.

For example, the apparatus may be configured to perform the recording of the user input through the virtual keyboard by storing data corresponding to the user input in a memory.

Further, the apparatus may be configured to perform the determination of the at least one character associated with at least one correction operation by: identifying data indicative of a correction operation from the user input history; determining data indicative of the character input next to the correction operation.

The apparatus may also be configured to perform the adjusting of the output of the at least one character by at least one of: enlarging a size of a zone defining the respective character; highlighting the respective character, changing a shape of the respective character.

Moreover, the apparatus may be configured to select the user input from the user input history applied in the determination by at least one of: over a predefined time window, based on an application applying the virtual keyboard, based on a recipient of a message composed with the virtual keyboard.

The apparatus may be configured to select the character for adjusting the output of the respective character from a character string forming a word, the word may be selected from a dictionary applied in a predictive input method by the device.

For example, the apparatus may be at least one of: a device comprising the virtual keyboard; an external entity communicatively connected to the device comprising the virtual keyboard.

The expression "a number of" refers herein to any positive integer starting from one, e.g. to one, two, or three.

The expression "a plurality of" refers herein to any positive integer starting from two, e.g. to two, three, or four.

Various exemplifying and non-limiting embodiments of the invention both as to constructions and to methods of operation, together with additional objects and advantages thereof, will be best understood from the following description of specific exemplifying and non-limiting embodiments when read in connection with the accompanying drawings.

The verbs "to comprise" and "to include" are used in this document as open limitations that neither exclude nor require the existence of unrecited features. The features recited in dependent claims are mutually freely combinable unless otherwise explicitly stated. Furthermore, it is to be understood that the use of "a" or "an", i.e. a singular form, throughout this document does not exclude a plurality.

### BRIEF DESCRIPTION OF FIGURES

The embodiments of the invention are illustrated by way of example, and not by way of limitation, in the figures of the accompanying drawings.
Figure 1 illustrates schematically a device and an external entity according to an example.
Figure 2 illustrates schematically a method according to an example.
Figure 3 illustrates schematically aspects of the invention according to an example.
Figure 4 illustrates schematically a device or an external entity according to another example.
Figure 5 illustrates schematically a system according to an example.

### DESCRIPTION OF THE EXEMPLIFYING EMBODIMENTS

The specific examples provided in the description given below should not be construed as limiting the scope and/or the applicability of the appended claims. Lists and groups of examples provided in the description given below are not exhaustive unless otherwise explicitly stated.

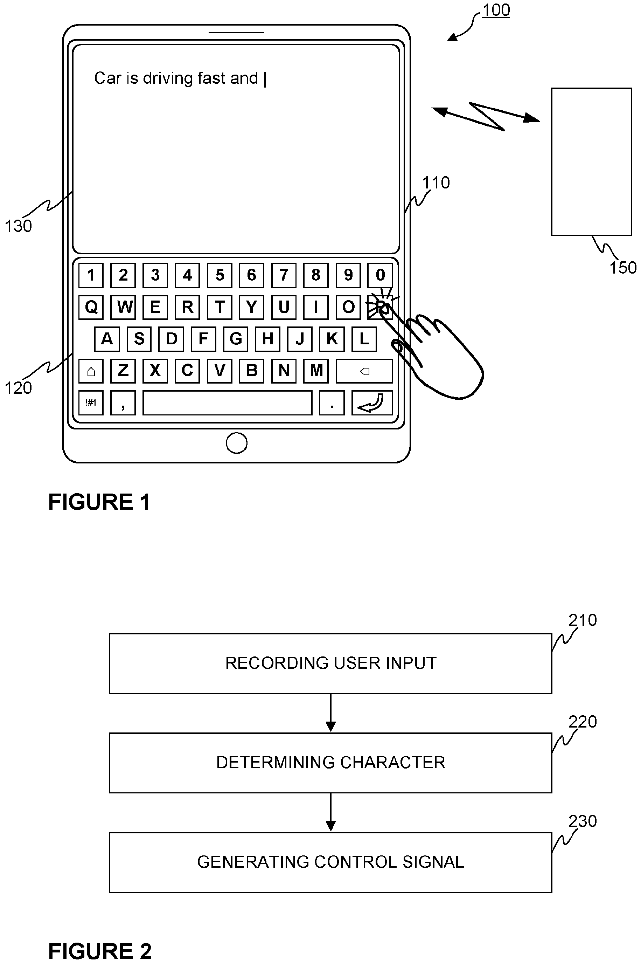

The present invention relates to a controlling of a virtual keyboard in a user interface of a device. The device may refer to a user device comprising a user interface implemented with a touch screen. An example of such a device 100 schematically illustrated in Figure 1 wherein the touch screen 110 is provided as the user interface. The applied touch screen 110 may be based on any known technology, such as based on capacitive or resistive sensing elements. In accordance with the present invention the touch screen 110 is configured to output a virtual keyboard 120 through which the user may provide input to the device 100. The virtual keyboard 120 may be configured to output one or more characters, such as an alphabetic character set. Each character is mapped with the input panel, or the sensing element, so that the device is able to receive an input corresponding to the character touch by the user with a finger, or any other input entity, such as a stylus. In other words, if the user touches a certain position of the virtual keyboard 120 implemented with the output panel, the position of the touch is detected based on a change in an output signal of the input device, such as in capacitance or in resistance, and data indicative of the input character may be generated in the device. Depending on an implementation the touch screen may also output another section to the virtual keyboard 120, such as a display section 130 showing the characters input by the user. For example, the user interface may be a user interface of a messaging application or a social media application as non-limiting examples.

In accordance with the invention the input received from the user is recorded and stored in a memory. The memory may reside in the device 100 or in an external entity 150, such as in a network node like server device, communicatively connected to the device 100 as shown in Figure 1. In other words, data representing characters and any other operations provided through the user interface 110, and, especially, through the virtual keyboard is recorded. The other operations may e.g. refer to an input of an enter (line break) or a shift function, or a correction operation with a predefined input formed in the virtual keyboard, such as with a backspace symbol or a delete symbol. In view of above, the data representing the user input with the virtual keyboard may e.g. be stored in accordance with a commonly known ASCII Key Code Value scheme wherein for each character, or operation, a dedicated code value is determined. For sake of clarity, it is worthwhile to mention that the term character herein shall be understood also to cover the functions, or operations, which may be provided with the virtual keyboard, on which some non-limiting examples are provided in the foregoing description. As said, the stored user inputs form the user input history record. In addition to the code values the record may comprise further information, such as further parameters associated with respect to each input, such a time stamp indicative of an instant of time of the input of the respective character.

For describing the present invention in more detail Figure 2 is referred to. Figure 2 illustrates schematically a method in accordance with an example of the invention. The method may e.g. be performed by a device 100 providing the virtual keyboard 120 to the user or by an external entity 150 receiving the user input from the device 100 providing the virtual keyboard 120. In some embodiments, the method may be performed in a cooperation of these two i.e. the device 100 and the external entity 150.

The user interacting with the virtual keyboard 120 provides inputs with the characters output in the virtual keyboard 120 and the user input through the virtual keyboard 120 of the device 100 is recorded 210 for generating a user input history. The user input history refers to data stored in a data record storing data indicative of the user input. The data may e.g. be stored chronologically, or at least so that each input is provided with a time stamp. Furthermore, the inputs may be associated with a further information, such as an identifier of an application through which the input is provided with the virtual keyboard 120. The application may e.g. be a messaging application or a social media application, or any similar in which the virtual keyboard 120 is applied to for providing input. Still further, the inputs, i.e. the data of the characters, may also be provided with information on a recipient of the message, which may refer to a person being a recipient of the message or a social media platform to which a message containing the characters is sent to.

In response to the generation of the user input history a determination of a number of characters may be performed from the user input history. More specifically, at least one character associated with at least one correction operation in a context of the user input may be identified from the user input history. This may be achieved by searching user input data corresponding to a correction operation, or function, by searching a code value corresponding to the correction operation which may e.g. refer to a use of the backspace or the delete function from the virtual keyboard 120. Moreover, in response to the identification of the correction operation it is determined the user input, i.e. the character, associated with the correction operation. In other words, data indicative of the correction operation may be identified from the user input history, and data indicative of the character input next to the correction operation may be determined. Hence, the idea is to determine the character input after the correction operation so as to derive information on the context when the user has performed the erroneous input. The context here may refer to a character related to the erroneous input and in the described case the character is the one the user intended to input prior to the error. The determination 220 as described may be performed to the whole user input history, or at least part of it, limited e.g. with a predefined time window, to a predefined application, to a predefined recipient, or to any other parameter. An advantage to associate the errors in the described manner is that it may be detected if some of the erroneous inputs occur with respect to certain instances, such as with a certain application or with respect to a certain recipient, and as a result the outcome of the method, as described in the forthcoming description, may be associated only to such instances.

Moreover, the method may comprise an establishment of a correlation data, as a sub-step of the determination 220, that indicates a number of occurrences of the erroneous inputs in association with certain characters. In other words, the correlation data may be generated to indicate an error rate with respect to each of the characters. From the data it is possible to derive the characters causing errors over a predefined limit and those characters may be interpreted to be difficult to reach by the user. As said, such an analysis may be performed by applying one or more criteria to the user input history data, such as a definition of a time window.

In accordance with the invention a control signal is generated 230 for adjusting an output of the at least one character on the virtual keyboard 120 with wherein the at least one character is selected based on the outcome of the determination step 220 as described. In other words, the at least one character is selected based on the at least one correction operation i.e. to those one or more characters associated with the correction operations in the manner as described.

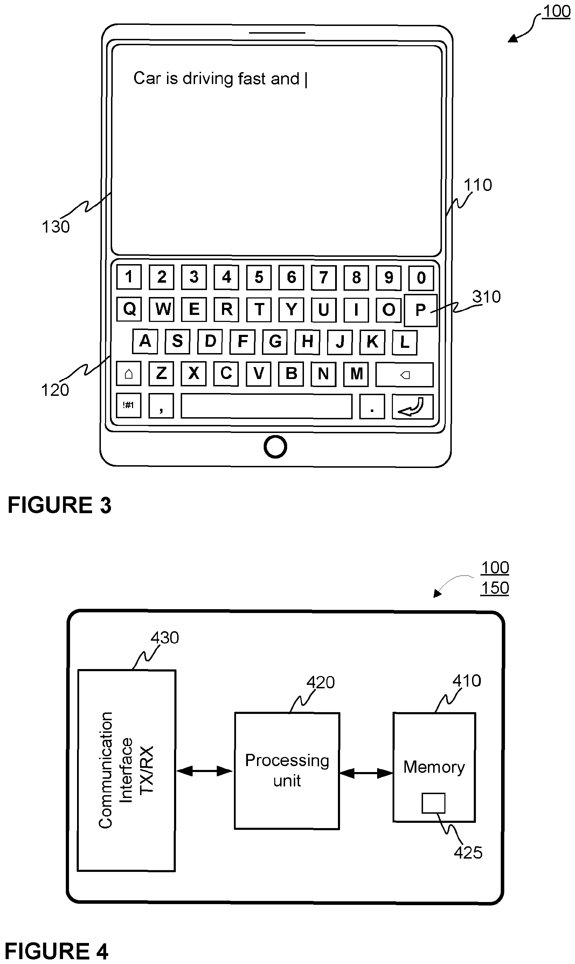

The adjustment of the output of the at least one selected character may refer to an enlarging a zone defining the selected character(s) by size in the virtual keyboard 120 from the normal size so as to allow the user to hit the respective character with an increased probability. The adjustment of the output of the respective character(s) may also correspond to a highlighting the respective character in the virtual user interface in any known manner, such as with a color or with any other marking, or by changing a shape of the respective character, so as to attract the user to select in a correct way. Figure 3 schematically illustrates, as an example, a virtual keyboard 120 in which the output of a character 310 is adjusted by enlarging it.

In sophisticated solutions, the adjustment of the output of the at least one character may be limited in some manner. For example, it may be limited by time, i.e. the adjustment is applied to a predefined period of time. Alternatively, it may be limited to be applied with respect to only a certain application implementing the virtual keyboard 120. Still further, it may be limited with respect to a recipient of the message. The application of the limitations in the described manner may be advantageous because it is possible to direct the adjustment only to those instances where the erroneous behavior is detected.

Still further, in some other sophisticated approaches the adjustment of the output of the character(s) may be performed with respect to certain words consisting of a plurality of characters. Such an approach may be performed by using commonly known dictionaries in the contexts of the determination step so as to derive understanding if the errors occur with respect to certain words only, and store information of the words together with the characters with whom the error has occurred. In such an approach it is possible to adjust the output of the respective character(s) only in a context when it may be assumed, e.g. by applying a commonly known predictive input method, that the user intends to write a certain word. In other words, the output of the correct characters belonging to the predicted word may be adjusted.

For sake of clarity, it is worthwhile to mention that the adjustment of the output of the character, especially when enlarged, may also cause redefining of a reading of the input panel of the touch screen 110 in a respective manner. This means that reading areas, or reading zones, are advantageously adjusted so that the input area of the respective character in the sensing panel corresponds to the output area of the same character. Such an adjustment in the readout may be performed in any known manner available to the applied touch screen technology.

The various example embodiments of the method as described above may be implemented with a processing unit configured to receive the input data from the virtual keyboard 120, the from the user interface 110 in general. The processing unit may reside in the device 100, but the invention is also possible to implement so that the method is performed in a computing unit being external to the device 100 such as in a network node communicatively connected to the device 100 by applying known communication technologies. In such an implementation the network node, or any other external computing entity to the device 100 may be configured to deliver the control signal so that it comprises instructions to the device 100 to operate in the predefined way.

An example of an apparatus, such as the device 100 or the entity 150, suitable for performing a method according to an example embodiment of the invention is schematically illustrated in Figure 4 as a block diagram. The apparatus may be configured to implement at least part of the method for managing the subscriber identity module related data as described. The execution of the method, or at least some portions of it, may be achieved by arranging at least one processor 410, or a processing unit, to execute at least some portion of computer program code 425 stored in at least one memory 420 causing the processor 410, and, thus, the apparatus to implement the method steps as described. In other words, the processor 410 may be arranged to access the memory 420 and to retrieve and to store any information therefrom and thereto. Moreover, the processor 410 may be configured to control a communication through one or more communication interfaces 430 for accessing the other entities being involved in the operation. Hence, the communication interface 430 may be arranged to implement, possibly under control of the processor 410, corresponding communication protocols, such as an IP or any other communication protocol, for communicating with one or more entities. The term communication interface 430 shall be understood in a broad manner comprising necessary hardware and software elements for implementing the communication techniques. Further, the apparatus in question comprises one or more input/output devices for inputting and outputting information. In accordance with the present invention such input/output devices forming a user interface may at least comprise a touch screen 110, but may also comprise further entities, such as a physical keyboard, buttons, display, loudspeaker, microphone camera and so on. In some implementation of the apparatus at least some of the input/output devices may be external to the apparatus and coupled to it either wirelessly or in a wired manner. For sake of clarity, the processor 410 herein refers to any unit or a plurality of units suitable for processing information and control the operation of the apparatus in general at least in part, among other tasks. The mentioned operations may e.g. be implemented with a microcontroller solution with embedded software. Similarly, the invention is not limited to a certain type of memory 420, but any memory unit or a plurality of memory units suitable for storing the described pieces of information, such as portions of computer program code and/or parameters, may be applied in the context of the present invention. Moreover, at least the mentioned entities may be arranged to be at least communicatively coupled to each other with an internal data connection, such as with a data bus.

In some examples, the apparatus may be implemented with a distributed computing environment in which a plurality of computing devices, such as the device 100 and the entity 150, is configured to cooperate to cause an execution of the method according to at least one of the examples as described.

As derivable from above, some aspects of the present invention may relate to a computer program product which, when executed by at least one processor, cause an apparatus to perform at least some portions of the method as described. For example, the computer program product may comprise at least one computer-readable non-transitory medium having the computer program code 425 stored thereon. The computer-readable non-transitory medium may comprise a memory device or a record medium such as a CD-ROM, a DVD, a Blu-ray disc, or another article of manufacture that tangibly embodies the computer program. As another example, the computer program may be provided as a signal configured to reliably transfer the computer program.

Still further, the computer program code 425 may comprise a proprietary application, such as computer program code for executing the management of the communication connection in the manner as described.

As mentioned in the foregoing description the memory storing the data of the user input may reside in the device 100 or externally to that. In other words, it may be stored physically in the device 100 itself or to an external entity 150, such as to a memory of a server device. The storing entity 100, 150 may be configured to perform the method, or at least part of it, so as to create data applicable for a user application through which the user provides the user input by using the virtual keyboard 120 as described. In addition to the physical location, the application of the data may be set available on different grounds. In accordance with a first example, the data to be applied in the virtual keyboard 120 may be set available on application basis. This may mean that the data is collected and set available only for a certain application, or so that a plurality of applications have their own data sets based on which the adjustment of the output of the at least one character on the application specific virtual keyboard is provided. This kind of approach is advantageous because a user may provide erroneous input on a user application basis meaning that different errors occur with different applications. According to a second example, the data applied with the virtual keyboard used in any application utilizes the same data generated from the user input. For example, the user input may be collected from the user inputs through a plurality of applications, or only from one application, and the data is used in the output of the respective characters of the virtual keyboard is applying the data of the user inputs and the approach may be considered as a generic approach. This kind of approach is advantageous since it collects a more comprehensive amount of user input data since it is collected from a plurality of applications and since only one data structure is maintained for the plurality of user application, it saves resources and simplifies the management of the system.

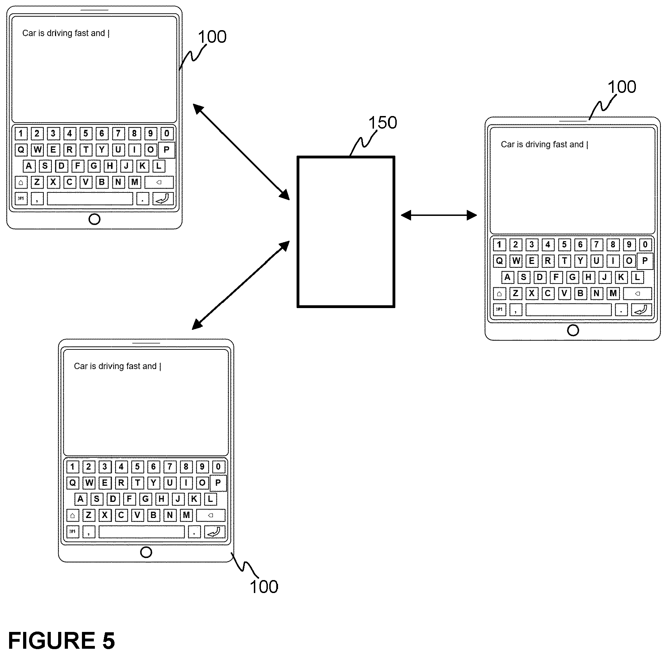

Figure 5 illustrates schematically a non-limiting example of a system according to an implementation of the invention in which the data is stored to an external entity 150 and a memory accessible to the external entity 150. Such an implementation of the invention is advantageous since it may be arranged that the data may be applied by a plurality of devices 100 used by a respective user. For example, the access to the data usable in each device 100 and stored in the external entity 150 may be arranged based on a user account, cf. a user profile. In other words, the storing of the data in the external entity 150 is performed on the user account basis and the access to the data is allowed by any device using the user account in question. The user account may be applied on the device level or an application level, for example. The access may be checked by applying any known mechanism, such as any identifier carried in the user account data or by requesting credentials at least at the first time from the user to access the data. The scenario disclosed in Figure 5 is also advantageous in a sense that when the user uses one of the devices any user input may be stored more or less in a real-time to the external entity 150 and the data is immediately available with any of other devices which improves any writing through the virtual keyboard of any of the devices 100 since the synchronization is immediate. Alternatively to the implementation wherein the external entity 150 maintains the data which is accessed by the plurality of devices 100 it may also be arranged that the external entity 150 is arranged to maintain so-called master data which is update in accordance with any input with any of the devices 100 of the user. The updated master data may then be delivered under predefined schedule, such as in response to the update or at predefined instants of time, to the plurality of devices 100. For sake of clarity, it is worthwhile to mention that the external entity 150 may, in some implementations, may be one of the devices 100 in which the master data is maintained to in the described manner.

The specific examples provided in the description given above should not be construed as limiting the applicability and/or the interpretation of the appended claims. Lists and groups of examples provided in the description given above are not exhaustive unless otherwise explicitly stated.

## Claims

1. A method, comprising:
recording (210) user input through a virtual keyboard (120) of a device (100) for generating a user input history,
determining (220), based on the user input history, at least one character associated with at least one correction operation in a context of the user input through the virtual keyboard (120) of the device (100),
generating (230) a control signal for adjusting an output of the at least one character on the virtual keyboard (120), the at least one character is selected based on the at least one correction operation.

2. The method of claim 1, wherein the recording (210) of the user input through the virtual keyboard (120) is performed by storing data corresponding to the user input in a memory.

3. The method of any of the preceding claims, wherein the determination (220) of the at least one character associated with at least one correction operation is performed by:
identifying data indicative of a correction operation from the user input history,
determining data indicative of the character input next to the correction operation.

4. The method of any of the preceding claims, wherein the adjusting of the output of the at least one character is performed by at least one of: enlarging a size of a zone defining the respective character; highlighting the respective character, changing a shape of the respective character.

5. The method of any of the preceding claims, wherein the user input from the user input history applied in the determination (220) is selected by at least one of: over a predefined time window, based on an application applying the virtual keyboard (120), based on a recipient of a message composed with the virtual keyboard (120).

6. The method of any of the preceding claims, wherein the character for adjusting the output of the respective character is selected from a character string forming a word, the word is selected from a dictionary applied in a predictive input method by the device (100).

7. A computer program comprising instructions which, when the program is executed by a computer, cause the computer to carry out the method according to any of claims 1 to 6.

8. An apparatus (100; 150) configured to:
record (210) user input through a virtual keyboard (120) of a device (100) for generating a user input history,
determine (220), based on the user input history, at least one character as-sociated with at least one correction operation in a context of the user input through the virtual keyboard (120) of the device (100),
generate (230) a control signal for adjusting an output of the at least one character on the virtual keyboard (120), the at least one character is selected based on the at least one correction operation.

9. The apparatus (100; 150) of claim 8, wherein the apparatus (100; 150) is configured to perform the recording (210) of the user input through the virtual keyboard (120) by storing data corresponding to the user input in a memory.

10. The apparatus (100; 150) of any of claim 8 or claim 9, wherein the apparatus (100; 150) is configured to perform the determination (220) of the at least one character associated with at least one correction operation by:
identifying data indicative of a correction operation from the user input history,
determining data indicative of the character input next to the correction operation.

11. The apparatus (100; 150) of any of the preceding claims 8 to 10, wherein the apparatus (100; 150) is configured to perform the adjusting of the output of the at least one character by at least one of: enlarging a size of a zone defining the respective character; highlighting the respective character, changing a shape of the respective character.

12. The apparatus (100; 150) of any of the preceding claims 8 to 11, wherein the apparatus (100; 150) is configured to select the user input from the user input history applied in the determination (220) by at least one of: over a predefined time window, based on an application applying the virtual keyboard (120), based on a recipient of a message composed with the virtual keyboard (120).

13. The apparatus (100; 150) of any of the preceding claims 8 to 12, wherein the apparatus (100; 150) is configured to select the character for adjusting the output of the respective character from a character string forming a word, the word is selected from a dictionary applied in a predictive input method by the device (100).

14. The apparatus (100; 150) of any of the preceding claims 8 to 13, wherein the apparatus (100; 150) is at least one of: a device (100) comprising the virtual keyboard (120); an external entity (150) communicatively connected to the device (100) comprising the virtual keyboard (120).
